# EUROPÄISCHE PATENTSCHRIFT

(11) **EP 2 677 226 B1**
(45) Veröffentlichungstag und Bekanntmachung des Hinweises auf die Patenterteilung: **28.01.2015**
(21) Anmeldenummer: 12172530.3
(22) Anmeldetag: 19.06.2012
(51) Int. Cl.: F16L 55/132, F16L 55/48, G01B 7/00, G01D 5/14, G01V 3/08

(54) **Stopfensuche in Rohrsystemen**
Search for plugs in pipe systems
Recherche de bouchons dans des systèmes de tuyauterie

(43) Veröffentlichungstag der Anmeldung: 25.12.2013
(73) Patentinhaber: Enrichment Technology Company Ltd. Zweigniederlassung Deutschland, 52409 Jülich (DE)
(72) Erfinder: Klose, Heiko, 45549 Sprockhövel (DE); Herking, Hermann-Josef, 48599 Gronau-Epe (DE); Meulenkamp, Thomas, 48599 Gronau-Epe (DE); Böckers, Rudolf, 48619 Heek (DE); Wesseling, Bruno, 48599 Gronau-Epe (DE)
(74) Vertreter: Jostarndt, Hans-Dieter

(56) Entgegenhaltungen:
- EP-A1- 0 376 796
- EP-A2- 1 452 827
- DE-A1- 3 122 643
- DE-A1-102008 022 583
- DE-U1- 9 002 162

## Beschreibung

### Gebiet der Erfindung

Die Erfindung bezieht sich auf ein mobiles Gerät zur Lokalisierung von Stopfen in einem Rohrsystem und auf ein entsprechendes Verfahren zur Lokalisierung dieser Stopfen nach dem Oberbegriff des unabhängigen Anspruchs 1 bzw. 12, wie aus DE-A-31 22 643 bekannt ist.

### Hintergrund der Erfindung

Rohrsysteme werden für Zu- und/oder Ableitungen von Medien für verschiedenste technische Anwendungen verwendet. Je nach Anwendung können diese Rohrsysteme eine große Länge und/oder eine komplizierte Struktur mit einem verzweigten Netz an Rohrleitungen aufweisen. Ein solches Rohrsystem besteht dabei aus einer Vielzahl an miteinander verbundenen Rohrleitungen, die in der Regel miteinander verschweißt sind. Dem eigentlichen Schweißvorgang vorangestellt ist eine Schweißnahtvorbereitung, die u.a. eine mechanische Bearbeitung des Rohrendes umfassen kann. Solche Bearbeitungen können beispielsweise Sägearbeiten am Rohrende zur Herstellung der benötigten Rohrlänge oder eine Bearbeitung der Schweißfläche am Rohrende umfassen, die Späne, Metall- oder Plastikteile oder Staub verursachen. Insbesondere Aluminiumrohre benötigen für spätere Schweißarbeiten zur Zusammenfügung zu einem Rohrsystem eine geeignete Schweißnahtvorbereitung, damit eine qualitativ gute Schweißnaht zwischen den Aluminiumrohren hergestellt werden kann. Außerdem können Werkstücke bei der Schweißnahtvorbereitung in die noch offenen Rohrenden fallen. Bei ausgedehnten Rohrsystemen kann das Entfernen eines in das Rohrsystem gefallenen Teils sehr aufwändig sein. Außerdem können die Verunreinigungen bei der Schweißnahtvorbereitung das Innere des Rohrsystems verschmutzen, was gerade bei technischen Anwendungen, die eine hohe Reinheit der in Rohrsystem transportierten Medien voraussetzen, verhindert werden muss.

Um zu verhindern, dass Verunreinigungen oder Werkstücke oder andere Teile in das Rohrssystem gelangen können, werden die offenen Rohrenden mit sogenannten Stopfen innen verschlossen. Für die Schweißnahtvorbereitung können die Stopfen nicht als Kappe über die offenen Rohrenden gestülpt werden, sondern müssen für eine freie Zugänglichkeit des Rohrendes für die Schweißnahtvorbereitung im Bereich des Rohrendes innerhalb des Rohres in einem gewissen Abstand zum Rohrende angebracht werden. Der Abstand des Stopfens im Rohr zum Rohrende ergibt sich aus dem für die Schweißnahtvorbereitung benötigten Arbeitsraum um das Rohrende herum, beispielsweise bei einer beabsichtigten Kürzung des Rohres muss der Stopfen entsprechend tief im Rohr angeordnet werden. Diese Stopfen werden typischerweise im Rohr festgeklemmt. Dazu sind diese Stopfen zumindest teilweise aus einem Gummimaterial hergestellt und besitzen einen vergrößerbaren Durchmesser, beispielsweise ein konisch geformter Gummistopfen, der mittels eines Gewindes mithilfe einer Gewindestange gespreizt werden kann, so dass der Gummistopfen an der Rohrinnenseite eines zylinderförmigen Rohres festgeklemmt wird. In einer alternativen Ausführungsform werden die Stopfen nur mit der Gewindestange in das Rohr eingeführt, klemmen dort aber alleine durch die Konische Form, deren maximaler Außendurchmesser größer als der Innendurchmesser des Rohrs ist, nach dem Einbringen in das Rohr. Andere Stopfen besitzen einen umlaufenden Gummiring, der zwischen zwei kreisförmigen Platten angeordnet ist. Der Abstand dieser Platten zueinander kann mittels einer Flügelmutter verringert werden, so dass sich der Gumiring nach außen wölbt und der Stopfen somit an der Innenseite eines zylindrischen Rohres festgeklemmt wird.

Diese Stopfen begrenzen den Bereich des Rohres, der während der Schweißnahtvorbereitung durch die Bearbeitungsvorgänge verschmutzt werden kann, auf den Abschnitt zwischen Stopfen und Rohrende. Nach Beendigung der Schweißnahtvorbereitung wird dieser Abschnitt gereinigt, und anschließend wird der Stopfen wieder entfernt. Leider werden gerade beim Aufbau von komplexen und langen Rohrsystemen immer wieder Stopfen vor dem Anbringen des nächsten Rohres nicht entfernt, so dass sich nach Fertigstellung des Rohrsystems solche vergessenen Stopfen weiterhin innerhalb des Rohrsystems befinden und dieses zumindest teilweise verschließen und dadurch die Funktion des Rohrsystems beeinträchtigen oder lahmlegen. Durch Abzählen der verwendeten Stopfen und der nach Abschluss der Arbeiten wieder entfernten Stopfen lässt sich zwar die Anzahl der noch im Rohrsystem befindlichen Stopfen feststellen, allerdings ist die Position der vor Inbetriebnahme des Rohrsystems zu entfernenden Stopfen unbekannt. Gerade bei komplexen und langen Rohrsystemen scheidet eine Demontage des gesamten Rohrsystems aufgrund des hohen Aufwands und der damit verbundenen Kosten in der Regel aus. Daher wird versucht, die Position des Stopfens festzustellen, damit lediglich ein kleiner Rohrabschnitt mit dem zu entfernenden Stopfen abgetrennt und ein neuer Rohrabschnitt dort eingesetzt werden muss. Da die Rohre in der Regel nicht transparent sind und der Stopfen mechanisch nach außen nicht sichtbar ist, werden heutzutage von den Rohrabschnitten, in denen Stopfen vermutet werden, Röntgenaufnahmen zur Lokalisierung der Stopfen angefertigt.

Die Anfertigung von Röntgenaufnahmen von Rohrabschnitten ist sehr aufwändig, insbesondere da die Position eines zu entfernenden Stopfens bestenfalls ungefähr bekannt ist und somit viele Aufnahmen zu einer erfolgreichen Lokalisierung angefertigt werden müssen. Bei manchen Rohrsystemen können auch bestimmte Rohrabschnitte, in denen sich ein solcher Stopfen befinden könnte, unzugänglich für die Röntgenuntersuchung sein. Andere Techniken, wie beispielsweise das Abklopfen eines Rohres, sind zwar einfacher anwendbar, liefern dagegen aber nur ungenaue Ergebnisse, so dass hier gegebenenfalls Rohrabschnitte fälschlicherweise abgetrennt werden, in denen sich der zu suchende Stopfen doch nicht befindet. Es ist daher wünschenswert, solche im Rohrsystem fälschlicherweise verbliebenen Stopfen mit geringem Aufwand möglichst schnell und zuverlässig lokalisieren zu können, damit diese dann gezielt über einen Austausch des betreffenden Rohrabschnitts entfernt werden können.

### Zusammenfassung der Erfindung

Es ist eine Aufgabe der vorliegenden Erfindung, eine Vorrichtung und ein Verfahren bereitzustellen, mit denen in einem Rohrsystem fälschlicherweise verbliebenen Stopfen mit geringem Aufwand möglichst schnell und zuverlässig für eine nachfolgende Entfernung lokalisiert werden können.

Diese Aufgabe wird gelöst durch ein Gerät und ein Verfahren nach dem Anspruch 1 bzw. 12. Der Stopfen umfasst zumindest einen Magneten, vorzugsweise ein Permanentmagnet, dessen Magnetfeld ausreichend stark ist, um ein detektierbares Magnetfeld zumindest an der äußeren Oberfläche des Rohres zu erzeugen. Beispielsweise bestehen solche Rohre aus einem nicht-ferromagnetischen Material. Nicht-ferromagnetische Materialien für Rohre sind beispielsweise Edelstahl, Aluminium, Kunststoff oder anderen für Rohre geeignete Materialien. Die Stopfen können allerdings auch in ferromagnetischen Rohren detektiert werden, sofern die magnetische Abschirmung durch das Rohrmaterial nicht zu stark ist, beispielsweise bei ferromagnetischen Rohren mit geringer Wandstärke und/oder bei entsprechend starken Magneten in den Stopfen. Die Stopfen können bekannte handelsübliche Stopfen zum inneren Verschließen von Rohren sein, die mit geeigneten Magneten nachgerüstet sind, oder Stopfen sein, die eigens mit solchen Magneten hergestellt werden. Die erfindungsgemäßen Stopfen können jede geeignete äußere Form zum inneren Verschließen von Rohren besitzen. Der Begriff "inneres Verschließen" bezeichnet das Abdichten eines Rohres gegenüber der äußeren Umgebung, wobei der Stopfen innen im Rohr angebracht wird. Im Gegensatz dazu steht ein Verschließen eines Rohres mittels einer über das Rohr übergreifender Kappe. Eine solche Kappe wäre per se von außen sichtbar und ist daher nicht Teil dieser Erfindung. Die Form der Stopfen muss für ein sicheres Verschließen der Rohre beispielsweise gegenüber einer von außen bewirkten Verschmutzung der inneren Form der Rohre angepasst sein. Geeignete Stopfen für zylinderische Rohre besitzen beispielsweise eine konische oder radähnliche Form. Das Material der Stopfen besteht vorzugsweise zumindest in dem Bereich der Stopfenoberfläche, die zur Erzielung einer Klemmwirkung an der inneren Oberfläche des Rohres anliegt, aus einem reversibel verformbaren Material, beispielsweise Gummi oder Perbunan, ein Synthesekautschuk mit hoher Elastizität und Druckverformungsresistenz, was eine vielfache Wiederverwendbarkeit des Stopfens ermöglicht. Die Stopfen umfassen des Weiteren eine mechanische Vorrichtung, mit der der Umfang der Stopfen zumindest in einem Bereich der Stopfen vergrößert werden kann, so dass der Stopfen im Rohrinneren verklemmt werden kann. Zum Entfernen des Stopfens wird der vorher vergrößerte Umfang des Stopfens wieder verkleinert, so dass sich der Stopfen mit verkleinertem Umfang wieder aus dem Rohrinneren entfernen lässt. Die Vorrichtungen zum Vergrößern und Verkleineren des Umfangs der Stopfen können im Rahmen der Erfindung vom Fachmann geeignet gewählt werden. Magnete, die magnetische Felder erzeugen, die außerhalb der Rohre noch detektierbar sind, sind alle Arten von geeigneten Elektromagneten oder Permanentmagneten. Ein Permanentmagnet ist vorteilhaft, da er keine Energieversorgung benötigt und das magnetische Feld der Stopfen jederzeit detektierbar ist.

Beispielsweise umfasst ein konisch geformter Stopfen für zylindrische Rohre eine konische innen hohle Außenform und eine ebenfalls konisch geformte Innenform mit größerer Wandsteigung. Drückt man diese Innenform in die konische Außenform hinein, beispielsweise mittels eine entsprechend in der Außen- und Innenform gehalterten Gewindestange, so wird der Umfang der konischen Außenform durch die auf die Außenform drückende Innerform vergrößert, und der Stopfen verklemmt sich innen im Rohr. Hier kann beispielsweise ein starker Magnet im Bereich zwischen Außenform und Innenform oder in einem anderen Bereich der konischen Außenform angeordnet werden. In einer anderen beispielhaften Ausführungsform umfasst der Stopfen für zylinderförmige Rohre zwei bewegliche Platten, zwischen denen das reversibel verformbare Material umlaufend angeordnet ist. Solche Stopfen können die Form eines Rades mit den Platten als geschlossene Speicherfläche und dem reversibel verformbare Material als Lauffläche besitzen. Die Platten können mit einer entsprechenden Vorrichtung, beispielsweise einer Gewindestange, aufeinander zu bewegt werden, wodurch ein Druck auf das entsprechend vorgeformte reversibel verformbare Material ausgeübt wird, so dass sich dieses nach außen wölbt und den Umfang des Stopfens vergrößert, wodurch eine Klemmwirkung auf die zylinderförmige Rohrinnenseite ausgeübt wird. Der Magnet kann dabei zwischen den Platten angeordnet sein, wobei die Dicke des Magneten auf die Entfernung zwischen den Platten in Klemmposition angepasst ist. Die Stopfen können auch für Rohrquerschnitte verwendet werden, die von der zylindrischen Form abweichen. Beispielsweise können für Rohre mit quadratischem oder rechteckigem Querschnitt entsprechend angepasste Stopfen mit einer Pyramidenform anstatt einer konischen Form oder mit quadratischen bzw. rechteckigen Platten und einem entsprechend umlaufenden reversiblen verformbaren Material zwischen den Platten ausgeführt sein. Voraussetzung für die Anordnung des Magneten ist lediglich ein ausreichendes freies Volumen im Stopfen.

In einer Ausführungsform besitzt der Magnet eine Form, die geeignet ist, ein Magnetfeld (oder magnetisches Feld) zumindest an der Außenseite des Rohres zu erzeugen, das im Klemmbereich des Stopfens umlaufend um das Rohr detektierbar ist. Das hat den Vorteil, dass unabhängig von der Position des Magneten im Stopfen und der Position eines erfindungsgemäßen Messkopfes in einem Bereich des Stopfens der Stopfen an seiner Position lokalisiert werden kann. Vorzugsweise besitzt der Magnet eine symmetrische Form innerhalb des Stopfens. Je nach Bauform des Stopfens kann der Magnet als Scheibe mit einer an die Bauform des Stopfens angepassten Form und Dicke in den Stopfen integriert werden. Diese Integration kann dadurch erfolgen, dass sich der Magnet innerhalb des von der Stopfenaußenseite definierten Volumens befindet. Alternativ kann der Magnet auch in oder an einem Teil der Oberfläche des Stopfens, der nicht für die Berührung der Innenwand des Rohrs vorgesehen ist, angeordnet sein. Vorzugsweise ist der Magnet in dem Teil des Stopfens nahe an der Innenwand des Rohres angeordnet, ohne dabei die Innenwand zu berühren. Beispielsweise kann als Berührungsschutz der Magnet von der Außenschicht des Stopfens überdeckt sein.

In einer Ausführungsform ist die geometrische Form des Magneten auf die geometrische Form der Innenseite des Rohres angepasst. Damit wird sichergestellt, dass der Magnet zum einen ein symmetrisches Magnetfeld durch das Rohr hindurch aufbaut, so dass die Detektion des Stopfens nicht von der Position des Messkopfes zur Detektion des magnetischen Felds in Klemmbereich des Stopfens abhängt. Zum anderen kann der Magnet durch entsprechende Maße so dichter an die Innenseite des Rohres positioniert werden, um die außen vorhandene Feldstärke des nach außen dringenden Magnetfelds zu stärken. Damit wird eine sichere Detektion des Stopfens ermöglicht. Beispielsweise hat ein solcher Magnet in einem zylindrischen Rohr eine zylindrische Form, beispielsweise in Form einer flachen Scheibe. In einem rechteckigen Rohr hätte der Magnet entsprechend eine rechteckige Form, in einem ovalen Rohr hätte der Magnet eine ovale Form.

In einer Ausführungsform umfasst der Stopfen im zentralen Bereich des Stopfens eine Vorrichtung zur Erzeugung einer Klemmwirkung im Rohrinneren und der Magnet ist scheibenförmig mit einem inneren Loch ausgestaltet, damit der Magnet umlaufend um diese Vorrichtung angeordnet werden kann. Der Begriff "scheibenförmig" bezeichnet hier ein Volumen des Magneten, dass eine große laterale Ausdehnung bei geringer Dicke des Magneten hat. Der Begriff "scheibenförmig" bezieht sich sowohl auf kreisrunde Scheiben, ovale Scheiben oder viereckige oder mehreckige Scheiben, je nach innerer Form des Rohres. Typischerweise haben Rohre allerdings einen runden Querschnitt.

Der Magnet kann in vorhandene Stopfen eingefügt werden, oder es können spezielle Stopfen mit solchen Magneten gefertigt werden. Der Magnet kann dabei reversibel in den Stopfen angeordnet oder fest mit den Stopfen verbunden sein. Ein reversible Anordnung des Magneten in dem Stopfen hat den Vorteil, dass der Magnet in einem größeren Hohlraum in den Stopfen angebracht werden kann, so dass der Magnet spannungsfrei montiert werden kann und somit weniger oder gar nicht mechanisch bei der Montage der Stopfen im Rohr belastet wird. Dadurch kann verhindert werden, dass der Magnet bei der Verwendung des Stopfens bricht oder bei einer Vielzahl an Verwendungen beschädigt wird. Bei einer reversiblen Montage kann zudem ein beschädigter Magnet einfach ausgetauscht werden. Als Material des Magneten kann jedes magnetische Material verwendet werden. Permanentmagneten können für die Erzeugung eines starken Magnetfelds Seltene Erden umfassen. Aus Kostengründen sind allerdings magnetische Materialien wie Fe/Co/Ni ohne Seltene Erden bevorzugt.

Die Verwendung dieser Stopfen macht eine schnelle und zuverlässige Lokalisierung von Stopfen in einem Rohrsystem mit geringem Aufwand möglich. Damit die Position dieses Stopfens in einem Rohrsystem auch tatsächlich mit geringem Aufwand möglichst schnell und zuverlässig lokalisiert werden kann, betrifft die Erfindung ein mobiles Gerät zur Lokalisierung von solchen Stopfen mit unbekannter Position in einem Rohrsystem. Das mobile Gerät umfasst nach Anspruch 1 einen Messkopf geeignet zur Auflage auf ein Rohr des Rohrsystems mit mindestens einem Näherungsschalter angeordnet auf einer dem zu untersuchenden Rohr zugewandten ersten Seite des Messkopfs zur Detektion des durch den Stopfen erzeugte magnetische Feld und mindestens eine mit dem Messkopf verbundene Signaleinheit geeignet zum Aussenden eines entsprechendes Lokalisierungssignal als Reaktion auf die Detektion des durch den Stopfen erzeugten magnetischen Feldes. Das mobile Gerät kann allerdings nur bei Rohren angewendet werden, die das magnetische Feld durch den Stopfen nicht zu stark abschirmen, also bespielsweise für nicht-ferromagnetische Rohre, wie beispielsweise Rohre aus Aluminium, Plastik oder Edelstahl. Die Rohrdurchmesser können dabei beispielsweise DN 25 oder mehr betragen, sogar mehr als DN 150. Geeignet sich aber auch Rohre mit Rohrdurchmessern kleiner als DN 25. Geeignete Wanddicken für Aluminiumrohre für den erfindungsgemäßen Messkopf können beispielsweise zwischen 0,5 mm und 10 mm liegen. Es können aber auch kleinere oder größere Wanddicken für die erfindungsgemäßen Vorrichtungen und Verfahren geeignet sein. Die Eignung einer Wanddicke hängt von der magnetischen Abschirmung des Magneten im Stopfen durch das Rohrmaterial ab. Bei ferromagnetischen Rohren sind tendenziell nur kleine Wanddicken geeignet. Die akzeptabelen Wanddicken bei ferromagnetischen Rohren hängen dabei auch von der Stärke des Magneten im Stopfen ab. Bei nicht-ferromagnetischen Rohren kann der Magnet auch bei großen Wanddicken lokalisiert werden. Mit dieser Kombination aus solchen Stopfen zur Abdichtung von Rohrenden, insbesondere für die Schweißnahtvorbereitung, und der Verwendung des erfindungsgemäßen Geräts zur Lokalisierung der erfindungsgemäßen Stopfen können diese Stopfen im Falle von fälschlicherweise im Rohrsystem verbliebene Stopfen mit geringem Aufwand schnell und zuverlässig lokalisiert und somit mit geringen Aufwand durch Abtrennen des betreffenden Rohrabschnitts mit Stopfen und Einfügen eines entsprechenden neuen Rohrabschnitts aus dem Rohrsystem entfernt werden. Das mobile Gerät ist in einer Ausführungsform mit einer Halterung, beispielsweise mit einer Kette, einem Band oder einem Riemen ausgestattet, die über den Kopf des Bedieners gehängt werden kann, damit dieser seine Hände für die Bedienung des Messkopfes frei hat. Damit die Näherungsschalter und die Signaleinheit betrieben werden können, ist das mobile Gerät beispielsweise mit Batterien oder aufladbaren Akkumulatoren ausgestattet, beispielsweise einer 9 V Flachbatterie.

Dadurch können andere sehr ungenaue mechanische Lokalisierungsverfahren, wie beispielsweise das Abklopfen des Rohres und das Horchen auf unerwartete Geräusche beim Abklopfen, vermieden werden. Abklopfgeräusche werden beispielsweise durch Rohrbefestigungen oder Rohranschlüsse bzw. Rohrverzweigungen so verfälscht, dass es zu einer Anzahl an Fehlinterpretationen mit entsprechend vergeblichem zusätzlichem Aufwand kommen würde. Außerdem brauchen keine Verfahren in Betracht gezogen zu werden, die zu einer Beschädigung des Rohres führen können, wie beispielsweise das manuelle Abfahren des Rohres von außen mit einem starken Permanentmagneten. Ein solches manuelle Verfahren könnte zum einen nur bei Stopfen überwiegend aus einem magnetischen Material angewendet werden, da sonst die magnetische Wirkung des Stopfens zu gering ist, um manuell festgestellt zu werden. Eventuell dafür geeignete Stopfen aus Metall können bei der Anbringung eventuell Bauteile im Rohr, wie beispielsweise Ventilklappen, beschädigen und sollten daher zur Sicherheit gegenüber inneren Rohrbeschädigungen nicht verwendet werden. Zum anderen befinden sich die Rohre in der Regel in einer magnetisierbaren Umgebung wie beispielsweise Rohrhalterungen oder andere umgebende Gestelle aus Eisen oder beinhalten selber magnetisierbare Materialien, so dass die fühlbare magnetische Wirkung auf den außen vorbeigeführten Permanentmagneten zu gering ist oder aber durch andere Ursachen als ein verbliebener Stopfen verursacht wird. Außerdem beschädigt das Herüberziehen eines starken und damit schweren Permanentmagneten die Rohre, insbesondere wenn die Rohre aus einem weichen Material wie Aluminium gefertigt sind. Das berührungslose Herstellen von Röntgenaufnahmen würde zwar die mechanischen Beschädigungen vermeiden, wäre aber zu aufwändig und in manchen Bereichen eines Rohrsystems aus Platzgründen überhaupt nicht anwendbar. Zusätzlich würde es Schutzmaßnahmen für das Bedienpersonal gegen die Röntgenstrahlung erfordern, was ebenfalls den Aufwand für die Stopfensuche erhöhen würde. Im Gegensatz dazu kann das erfindungsgemäße mobile Gerät bei kleiner Baugröße des Messkopfes praktisch überall eingesetzt werden, erfordert keinerlei vorbereitende oder absichernde Maßnahmen, kann ohne Vorbildung von jedermann ausgeführt werden und detektiert sicher und selektiv die erfindungsgemäßen Stopfen, wobei die Untersuchung des Rohres zerstörungsfrei erfolgt, dass heißt, es finden keine Beschädigungen der Rohroberseiten oder daran befindlicher Komponenten während der Stopfensuche statt.

Ein solcher Näherungsschalter (auch Näherungsinitiator oder Annäherungsschalter genannt) verwendet Sensoren, die auf Annäherung, d. h. ohne direkten Kontakt, berührungsfrei reagieren. Näherungsschalter werden bei technischen Prozessen u.a. zur Positionserkennung von Werkstücken und Werkzeugen, in diesem Fall Stopfen in einem Rohrsystem, eingesetzt. In einer Ausführungsform des Näherungsschalters sind die Sensoren und Schalter in dem Näherungsschalter vereinigt. Der hier verwendete Näherungsschalter ist ein magnetischer Näherungsschalter wie beispielsweise ein sogenannter Reedschalter oder Reedkontakt oder ein Hall-Sensor. Diese Sensoren reagieren auf ein Magnetfeld und erzeugen ein entsprechendes Signal in Gegenwart eines Magnetfeldes. Näherungsschalter-Bauteile sind beispielsweise als flache streifenförmige Quader mit Breiten und Höhen im Millimeterbereich und Längen von wenigen Millimetern bis zu mehreren Zentimetern erhältlich.

Ein Reed-Relais bezeichnet dabei ein Relais zum Schalten eines Stromkreises, welches mit einem Reedschalter arbeitet. Reed-Schaltkontakte sind Kontaktzungen, die zugleich die Kontaktfeder und den Magnetanker bilden. Die Kontaktzungen werden aus edelmetallbeschichtetem ferromagnetischem Material (z. B. Weicheisen) hergestellt. Die Kontaktbetätigung erfolgt durch das durch die Rohrwand des Rohres hindurchtretende Magnetfeld, das von einem in der Nähe befindlichen Stopfen über den im Stopfen befindlichen Dauermagneten oder einer im Stopfen befindlichen betriebenen Magnetspule elektrisch erzeugt wird. Durch das Magnetfeld ziehen sich die beiden Kontaktzungen an und schließen somit die Schaltung. Sobald das Magnetfeld abfällt oder eine bestimmte Feldstärke im Relais unterschritten wird, öffnet sich der Kontakt aufgrund der Federwirkung wieder. Wird ein Hall-Sensor von einem Strom durchflossen und in ein senkrecht dazu verlaufendes Magnetfeld gebracht, liefert er eine Ausgangsspannung, die proportional zum Produkt aus magnetischer Feldstärke und Strom ist (Hall-Effekt). Ein Hall-Sensor liefert auch dann ein Signal, wenn das Magnetfeld, in dem er sich befindet, konstant ist, wie es hier der Fall ist. Der Fachmann kann im Rahmen der vorliegenden Erfindung die zu verwendenden Näherungsschalter geeignet wählen.

Der Messkopf ist der Träger der Näherungsschalter und dient zudem als Auflage auf die Außenseite des zu untersuchenden Rohrs. Die Form des Messkopfes kann vom Fachmann geeignet gewählt werden, wobei die erste Seite des Messkopfes für eine Auflage auf der Außenseite des Rohrs vorgesehen und so beschaffen ist, dass sie die Oberfläche des Rohres nicht beschädigt. Vorzugsweise ist zumindest die erste Seite aus einem glatten und weichen Material beschaffen, dass allerdings einen geringen Reibungskoeffizienten für gängige Rohrmaterialien hat. Beispielsweise ist der Messkopf zumidest zum überwiegenden Teil aus Kunststoff gefertigt. Die Näherungsschalter sind mit entsprechenden elektrischen Verbindungen über den Messkopf mit der Signaleinheit verbunden, damit diese ein Lokalisierungssignal für den Bediener des mobilen Geräts aussenden kann, sobald durch den oder die Näherungsschalter ein Magnetfeld detektiert wurde. Als Beispiel ist der Messkopf an einem Ende eines Stabes montiert und kann manuell mithilfe des Stabes über die Außenseite des Rohres bewegt werden. Die Montage des Messkopfes ist vorzugsweise so ausgestaltet, dass der Messkopf reversibel auf dem Stab montiert ist und gegen andere Messköpfe ausgetauscht werden kann. Die reversible Montage wird beispielsweise durch entsprechende Steckkontakte verwirklicht. Durch die Austauschbarkeit können besonders geeignete Messköpfe, die auf die entsprechenden Rohrformen angepasst sind, für die Untersuchung der jeweiligen Rohre verwendet werden. Die elektrischen Leitungen werden durch den Stab hindurch zu einer Signaleinheit geführt, die mit den Stab über eine starre oder eine flexible Verbindung (Verbindungskabel) verbunden ist. Das Lokalisierungssignal kann jedes Signal bezeichnen, das geeignet ist, den Bediener des mobilen Geräts auf die Detektion eines Magnetfelds aufmerksam zu machen, beispielsweise durch akustische, optische oder taktile Signale. Die Ausgestaltung des Lokalisierungssignals und die Art und Anzahl der Mittel, mit denen das Lokalisierungssignal ausgesendet wird, kann vom Fachmann im Rahmen der vorliegenden Erfindung geeignet gewählt werden.

In einer Ausführungsform, die nicht im Rahmen der Erfindung liegt, umfasst der Messkopf mindestens zwei Näherungsschalter angeordnet auf der ersten Seite mit einem ersten Abstand zueinander, von denen jeder Näherungsschalter unabhängig voneinander zur Detektion des durch den Stopfen erzeugten magnetischen Feldes geeignet ist. Hierbei kann der erste Abstand auf die Dimensionen des zu untersuchenden Rohrs angepasst sein. Es können beispielsweise für Rohre mit verschiedenen Durchmessern und Querschnittsformen unterschiedliche Messköpfe mit unterschiedlichen Anordnungen von Näherungsschaltern, beispielsweise mit unterschiedlichen ersten Abständen, gewählt werden. Durch die Verwendung von mindestens zwei Näherungsschaltern ist auch bei einer Verkantung des Messkopfes (es liegt nicht die komplette erste Seite auf dem Rohr auf bzw. es liegt nur die Kante der ersten Seite parallel zur Längsrichtung des Rohres auf der Außenseite des Rohres auf) sichergestellt, dass sich zumindest einer der beiden Näherungsschalter entweder in Kontakt mit der Oberfläche des Rohrs beziehungsweise in einer geringen Entfernung zur Oberfläche des Rohres befindet. Je dichter der Näherungsschalter am Magneten im Stopfen ist, desto genauer wird das Magnetfeld des Stopfens detektiert. Ein Näherungsschalter ist umso näher am Magneten des Stopfens, je näher er sich an der Oberfläche des Rohres, vorzugsweise auf der Oberfläche des Rohres, befindet. In einer bevorzugten Ausführungsform besitzt die erste Seite eine Kontur, die auf das zu untersuchende Rohr angepasst ist. Dadurch wird der minimal mögliche Abstand zwischen Näherungsschalter im Messkopf und Magneten im zu suchenden Stopfen weiter verringert. Die erste Seite hat beispielsweise eine Rechteckform, die im Falle von zylindrischen Rohren eine konkave Wölbung besitzt, die so ausgestaltet ist, dass die konkave erste Seite auf dem zylindrischen Rohr aufliegt.

Erfindungsgemäß umfasst die erste Seite vier Näherungsschalter, wobei der Abstand zwischen dem erster und dem zweiten Näherungsschalter sowie zwischen dem dritten und dem vierter Näherungsschalter dem ersten Abstand entspricht und der zweite und der dritte Näherungsschalter in einem zweiten Abstand größer als der erste Abstand angeordnet sind. Mit dieser Anordnung können mit einer bestimmten Kontur der ersten Seite beispielsweise zylindrische Rohre mit unterschiedlichem Durchmesser mit dem gleichen Messkopf untersucht werden. Bei Rohren mit einem kleineren Durchmesser kann der Messkopf bei aufliegenden ersten und zweiten oder dritten und vierten Näherungsschaltern auf dem Rohr entlang bewegt werden. Bei einem Rohr mit mittlerem Durchmesser wird der Messkopf mit aufliegenden zweiten und dritten Näherungsschaltern auf dem Rohr entlang bewegt werden. Bei Rohren mit noch größeren Durchmessern wird der Messkopf mit aufliegenden ersten und vierten Näherungsschaltern auf dem Rohr entlang bewegt werden. Die Kontur der ersten Seite ist eine V-förmige Kontur. Dadurch befindet sich unabhängig von der Rohrform immer zumindest einer der Näherungsschalter auf oder in einer geringen Entfernung zur Oberfläche des zu untersuchenden Rohres.

In einer weiteren Ausführungsform definiert die Kontur der erste Seite eine geeignete Bewegungsrichtung des Messkopfes entlang der Längsrichtung der Rohre, und die Näherungsschalter sind streifenförmige Näherungsschalter, die parallel zur Bewegungsrichtung des Messkopfes angeordnet sind, und wobei die Näherungsschalter parallel zueinander angeordnet sind. Die entsprechend ausgestaltete Kontur verhindert ein Verkippen des Messkopfes bei der Bewegung und somit ein Entfernen der Näherungsschalter von der Oberfläche des zu untersuchenden Rohres. Durch die parallele und zueinander ausgerichtete Anordung der Näherungsschalter wird das magnetische Feld ortsgenau und gegebenenfalls von mehreren Näherungsschaltern gleichzeitig detektiert, was die Messgenauigkeit und Aussagekraft des Lokalisierungssignals erhöht.

In einer Ausführungsform ragen der oder die Näherungsschalter aus der ersten Seite heraus. Dadurch wird sichergestellt, dass sich zumindest einer der Näherungsschalter im direten Kontakt zur Oberfläche des Rohres befinden kann, auch wenn der Messkopf nicht die an die Form des Rohres angepasste Kontur besitzt oder der Messkopf leicht verkippt (seitlich zur Bewegungsrichtung oder in Bewegungsrichtung) ist. Ein entsprechend angeordneter Näherungsschalter kann beispielsweise 1 - 2 mm aus der ersten Seite herausragen.

In einer weiteren Ausführungsform umfasst die Signaleinheit akustische und optische Mittel zur Aussendung eines akustischen und optischen Lokalisierungssignals. Akustische Lokalisierungssignale sind vorteilhaft, da der Bediener des Geräts in der Regel auf den Messkopf und das zu untersuchende Rohr schaut und daher am besten akustisch auf das detektierte Magnetfeld aufmerksam gemacht wird. Das zusätzliche optische Signal kann gerade in einem dunklen Abeitsraum auch ohne direkte Sicht des Bedieners auf die entsprechenden Mittel das akustische Signal unterstützen, gerade auch in Bereichen mit einem erhöhten Lärmpegel. Damit erhöht sich die Redundanz des Lokalisierungssignals. In einer bevorzugten Ausführungsform umfasst die Signaleinheit pro Näherungsschalter ein separates optisches Mittel, das unabhängig von den anderen Näherungsschaltern nach Detektion des durch den Stopfen erzeugten magnetischen Felds das optische Lokalisierungssignal aussendet. Dadurch kann vom Bediener überprüft werden, durch welche der Näherungsschalter die Aussendung des Lokalisierungssignals verursacht wurden. Damit kann das Magnetfeld des Stopfens noch ortsgenauer detektiert werden. Geeignete optische Mittel sind beispielsweise Leuchtdioden.

In einer weiteren Ausführungsform besitzt der Messkopf eine Ausdehnung senkrecht zur ersten Seite, die größer ist als die Entfernung, in der das Magnetfeld des Stopfens durch die Näherungsschalter detektiert werden kann. Dadurch wird verhindert, dass der Messkopf mit der oberen Seite (Seite des Messkopfes, die der ersten Seite gegenüber liegt) so nahe an einem parallelen Rohr vorbeigeführt wird, dass die Näherungsschalter, die auf einem ersten Rohr aufliegen, dennoch das Magnetfeld eines Stopfens in dem parallelen Rohr detektieren und die Signaleinheit dies anzeigt. Da aber der Messkopf auf dem ersten Rohr entlang geführt wurde, würde das Lokalisierungssignal dem ersten Rohr zugeordnet und dieses an der detektierten Stelle abgetrennt werden, obwohl sich der Stopfen, der das detektierte Magnetfeld aussendet, nicht im ersten Rohr, sondern in dem dazu parallelen Rohr befindet. Diese Art von Fehlinterpretationen wird vermieden, wenn der Messkopf über seine Dicke selber eine zu dichte Annäherung der Näherungsschalter an ein gegenüberliegendes (paralleles) Rohr verhindert. Haben die Näherungsschalter dadurch einen hinreichend großen Abstand zum gegenüberliegenden parallelen Rohr, können sie ein dortiges Magnetfeld im nicht untersuchten Rohr nicht detektieren, sondern können nur ein vorhandenes Magnetfeld im der ersten Seite zugewandten untersuchten Rohr detektieren. Eine solche Ausdehnung des Messkopfes sollte mehr als 2cm, vorzugsweise mehr als 3 cm betragen.

Die Erfindung betrifft des Weiteren ein Verfahren zur Lokalisierung von mindestens einem Stopfen wie oben beschrieben zum reversiblen inneren Verschließen von Rohren, der sich innerhalb eines Bereichs eines Rohres an einer unbekannten Position befindet, umfassend die Schritte
- Auflegen zumindest eines Teils einer ersten Seite eines Messkopfes eines mobilen Geräts gemäß der vorliegenden Erfindung zur Lokalisierung von Stopfen auf die äußere Seite des zu untersuchenden Rohres,
- Bewegen des Messkopfes entlang der Längsrichtung der Rohre, bis die Signaleinheit des mobilen Geräts ein Lokalisierungssignal aussendet, und
- Aufbringen einer Markierung auf der Außenseite des Rohres, wo die Signaleinheit des mobilen Geräts das Lokalisierungssignal ausgesendet hat.

Geeignete Bereiche mit hinreichend geringer magnetischer Abschirmung sind beispielsweise nicht-ferromagnetische Bereiche eines Rohres, beispielsweise Bereiche aus Aluminimum, Plastik oder Edelstahl. Nach Aufbringen einer Markierung kann gegebenfalls sofort nach weiteren Stopfen im Rohrsystem gesucht werden. Zur Entfernung des gefundenen Stopfens wird zu einem späteren Zeitpunkt der Rohrabschnitt um den Stopfen herum abgetrennt, entfernt und ein entsprechender Rohrabschnitt zum erneuten Verbinden der dadurch entstehedenen offenen Rohrenden eingesetzt. Die Schweißnahtvorbereitung für den neu einzusetzenden Rohrabschnitt erfolgt wie bereits voranstehend für Rohre allgemein beschrieben. Die Stopfen müssen auch hier nach erfolgter Schweißnahtvorbereitung wieder aus den Rohrenden entfernt werden.

In einer Ausführungsform umfasst das Verfahren des Weiteren die Schritte
- Verwenden eines für ein jeweiliges Material des Rohrs geeigneten Stopfens wie oben beschrieben, der vorliegenden Erfindung, der mit mindestens einem auf das Material des Rohres angepassten Magneten zur Erzeugung eines bei diesem Material des Rohres zumindest an der äußeren Oberfläche des Rohres detektierbaren Magnetfelds ausgestattet ist.

Bei leicht magnetischen Rohren mit unvollständiger Abschirmung kann das magnetische Feld eines Stopfens mit Magneten festgestellt werden, wenn der Magnet im Stopfen ein hinreichend starker Magnet ist. Besonders starke Magneten sind beispielsweise SmCo-Magneten.

### Kurze Beschreibung der Abbildungen

Diese und andere Aspekte der Erfindung werden im Detail anhand der Abbildungen wie folgt gezeigt:
- Fig.1:: eine Ausführungsform eines Stopfens in (a) Seitenansicht der Klemmposition in einem Rohr, und (b) in Draufsicht.
- Fig.2:: eine weitere Ausführungsform eines anderen Stopfens in (a) Seitenansicht der Klemmposition in einem Rohr, und (b) in Draufsicht.
- Fig.3:: eine Ausführungsform eines mobilen Geräts zur Lokalisierung solcher Stopfen in einem Rohr.
- Fig.4:: Lokalisierung eines solchen Stopfens in einem Rohr mittels des erfindungsgemäßen mobilen Geräts.

### Detaillierte Beschreibung der Ausführungsbeispiele

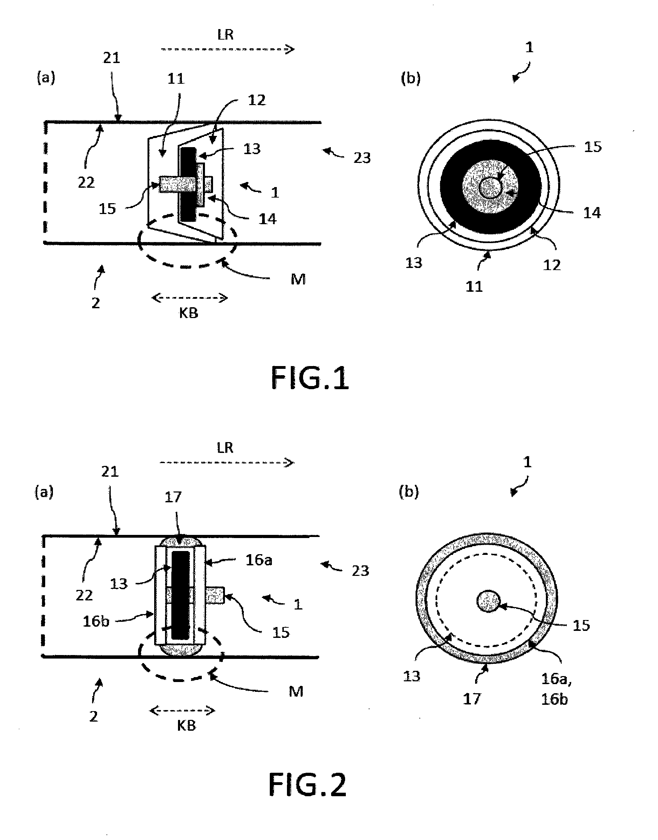

Fig. 1 zeigt eine Ausführungsform eines Stopfens 1 in (a) Seitenansicht der Klemmposition in einem Rohr 2, und (b) in Draufsicht. Der Stopfen 1 besitzt in dieser Ausführungsform eine konische Form zum reversiblen inneren Verschließen von zylindrischen Rohren 2. Der Magnet 13 des Stopfens 1 ist als Permanentmagnet ausgeführt, dessen Magnetfeld M ausreichend stark ist, um ein detektierbares Magnetfeld M zumindest an der äußeren Oberfläche 21 (Außenseite) des Rohres 2 aus einem nicht-ferromagnetischen Material zu erzeugen. Der Stopfen in Fig.1 umfasst eine konische in einem inneren Bereich hohle Außenform 11 und eine ebenfalls konisch geformte Innenform 12 mit größerer Wandsteigung als die Außenform 11, die ebenfalls innen hohl sein kann. Drückt man diese Innenform 12 in die konische Außenform 11 hinein, beispielsweise mittels einer entsprechend in der Außen- und Innenform 11, 12 angeordneten Vorrichtung 15 als Gewindeloch, in die eine Gewindestange oder Flügelmutter eingeschraubt und darüber die Innenform 12 in die Außenform 11 hineingeschraubt werden kann. Dadurch wird der Umfang der konischen Außenform 11 durch die auf die Außenform 11 drückende Innenform 12 vergrößert und der Stopfen 1 im Rohrinneren 22 verklemmt. Für die Schweißnahtvorbereitung zum Zusammenfügen von zwei Rohren 2, beispielsweise Aluminiumrohren, an ihren jeweiligen Rohrenden 23, wird der Stopfen 1 vorher in das Rohr 2 in eine geeignete Position in der Nähe des Rohrendes 23 hineingeschoben. Die Position im Rohr 2 soll einerseits genügend Arbeitsraum für die Schweißnahtvorbereitung am Rohrende 23 zur Verfügung stellen und andererseits das Rohr möglichst kurz vor dem Rohrende 23 vor Verschmutzung durch die Schweißnahtvorbereitung schützen. Um eventuelle Partikel, die durch die Schweißnahtvorbereitung in das Rohrende 23 bis zum Stopfen 1 hereinfallen auffangen zu können, ist der Stopfen 1 in dieser Ausführungsform mit einer innen hohlen Innenform 12 ausgestattet, die die Partikel dadurch auffängt. Nach Beendigung der Schweißnahtvorbereitung kann das Rohrende 23 und die Innenform 12 des Stopfens gereinigt und der Stopfen 1 anschließend entfernt werden. Der Stopfen 1 ist zusätzlich mit einem starken Magneten 13 am Boden der Innenform 12 ausgestattet. Durch die Vorrichtung 15 zur Erzeugung einer Klemmwirkung im Rohrinneren 22 ausgeführt als Gewindeloch, das über den Boden der Innenform 12 heraussteht, kann der Magnet 13, der als Scheibe mit einem Loch im Bereich der Vorrichtung 15 ausgeführt ist, durch die Vorrichtung 15 und einer von außen auf die Vorrichtung 15 geschraubte Haltevorrichtung 14 für den Magneten im Stopfen 1 gehaltert werden. Die Dimensionen der Scheibenform des Magneten sind auf die Dimensionen der Innenform 12 und der Vorrichtung 15 (mit einem Innengewinde zur Erzeugung einer Klemmwirkung und einem Außengewinde zur Halterung des Magneten) so angepasst, dass der Magnet 13 einfach in der Innenform 12 gehaltert werden kann. Diese Halterung 14 stellt zudem sicher, dass der Magnet keinen zusätzlichen Kräften durch die Klemmwirkung ausgesetzt ist und daher das Risiko eines Brechens des Magneten bei zu starker Klemmwirkung ausgeschlossen werden kann. In einem solchen Stopfen beispielsweise für DN 65 Rohre mit einem Außendurchmesser von 76,1 mm und einer Wandstärke von 3,65 mm hat der Stopfen 1 ohne Klemmwirkung beispielsweise einen Durchmesser von 67 mm, der durch das Hineindrücken der Innenform 12 in die Außenform 13 vergrößert werden kann. Der hohle Bereich im Stopfen 1 kann dabei einen scheibenförmigen Magneten 13 mit einem Scheibendurchmesser von beispielsweise 55 mm und einer Scheibendicke von beispielsweise 12 mm aufnehmen. Das Loch in der Mitte des Magneten 13 zur Halterung des Magneten an der Vorrichtung 15 ist in der Scheibe zentriert angeordnet und hat einen Durchmesser beispielsweise von 23 mm. Der Fachmann kann im Rahmen der vorliegenden Erfindung die Dimensionen des Magneten 13 gegebenenfalls variieren. Außerdem kann die Anordnung der Vorrichtung 15 oder die Stopfenform beziehungsweise die Anordnungen von Außen- und Innenform 11, 12 im Rahmen der vorliegenden Erfindung geeignet variiert werden. In anderen Ausführungsformen kann der Magnet 13 auch zwischen Innenform 12 und Außenform 11 oder als Teil der Außenform 11 angeordnet werden. In einer anderen Ausführungsform kann die Haltevorrichtung 14 für den Magneten auch in das Innengewinde der Vorrichtung 15 geschraubt werden. Die Haltevorrichtung 14 besitzt dabei einen Anschlag, der ein zu weites Hineinschrauben der Haltevorrichtung 14 in die Vorrichtung 15 verhindert. Die Haltevorrichtung 14 besitzt wiederum ein in Richtung der Außenform 11 (nach unten) geschlossenes Gewindeloch, in das die Gewindestange hineingeschraubt werden kann, um über dieses Innengewinde dann die Innenform 12 zur Erzielung einer Klemmwirkung in die Außenform 11 hineinzudrücken. Diese Anordnung hat den Vorteil, dass das in Richtung der Außenform 11 geschlossene Gewindeloch verhindert, dass eine zu weit in das Gewindeloch hineingeschraubte Gewindestange den Boden der Außenform 11 beschädigen kann. Dies ist insbesondere dann von Vorteil, wenn die Außenform vollständig aus einem weichen Material wie beispielsweise Perbunan gefertigt ist. Der in Fig.1 gezeigte Stopfen 1 kann für andere Rohre 2, beispielsweise DN 25, DN 40, DN 80, DN 125 Rohre entsprechend angepasste Dimensionen besitzen. Bei kleineren/größeren Rohrdurchmessern besitzt der Magnet 13 einen entsprechend angepassten kleineren/größeren Durchmesser als im Beispiel des DN 65 Rohres.

Fig.2 zeigt eine weitere Ausführungsform eines anderen Stopfens 1 in (a) Seitenansicht der Klemmposition in einem Rohr 2, und (b) in Draufsicht. Dieser Stopfen entwickelt seine Klemmwirkung an der Innenseite 22 des Rohres 2 nach einem anderen Prinzip als bei dem Stopfen in Fig.1. Der Stopfen 1 umfasst zwei Platten 16a, 16b, die über ein weiches komprimierbares Material 17, beispielsweise Gummi, verbunden sind. Dieses Material 17 bildet eine umlaufende Fläche zwischen den Platten 16a, 16b. Drückt man die Platten 16a, 16b gegeneinander, wird die umlaufende Fläche 17 nach außen gewölbt, so dass sich der Durchmesser des Stopfens 1 vergrößert und so an der Innenseite 22 des Rohres 2 in einem Klemmbereich KB festklemmt. Das Gegeneinanderdrücken (oder Zusammendrücken) der Platten kann ebenfalls durch eine Schraubverbindung mittels Gewindestange oder Flügelmutter erreicht werden. Beispielsweise ist eine Vorrichtung 15 mit Außengewinde fest mit der einen Platte 16b verbunden und durch die andere Platte 16a hindurchgeführt, so dass die Vorrichtung 15 über die Platte 16a auch in Zustand des Stopfens 1 ohne Klemmwirkung herausragt. Schraubt man nun eine Flügelmutter (aus Übersichtsgründen nicht explizit in Fig.2 gezeigt) auf das Außengewinde der Vorrichtung 15, kann man mithilfe dieser Flügelmutter die Platten 16a, 16b gegeinander zur Erzielung einer Klemmwirkung über das dadurch sich hinauswölbende Material 17 drücken . Die Bauart des Stopfens 1 bedingt einen hohlen Innenbereich zwischen den Platten 16a, 16b auch bei Ausübung einer Klemmwirkung auf die Innenseite 22 eines Rohres 2. In diesen Innenbereich zwischen den Platten 16a, 16b kann ein ähnlich wie in Fig.1 geformter Magnet mit einer Scheibenform mit einem zentralen Loch mit Durchmesser geeignet zum Durchführen der Vorrichtung 15 angeordnet werden. Bei einem solchen Stopfen 1 geeignet für 4-Zoll Rohre (DN 100), hat der scheibenförmige Magnet 13 beispielsweise einen Durchmesser von 72 mm, eine Dicke von 15 mm und ein zentrales Loch in der Scheibe mit einem Durchmesser von beispielsweise 32 mm. Zum Verhindern eines Verrutschens des Magneten 13 im Stopfen 1 können noch Unterlegscheiben oder Einsatzringe aus Plastik an oder über der Vorrichtung 15 im Innenbereich zwischen der Platten 16a, 16b angeordnet sein. Diese Einsatzringe können auch ein zu starkes Zusammendrücken der Platten 16a, 16b verhindern, damit der Magnet 13 nicht durch die zusammendrückenden Platten beschädigt wird, beispielsweise bricht.

Die Stopfen 1 können einerseits durch Nachrüsten bekannter Stopfen mit entsprechend angepassten Magneten 13 gebildet oder andererseits im Rahmen der vorliegenden Erfindung vom Fachmann anders gestaltet werden.

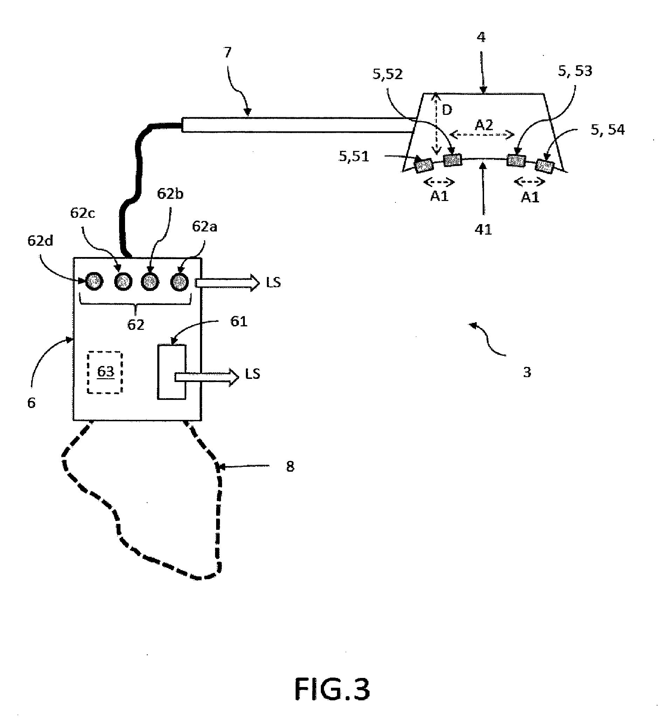

Fig.3 zeigt eine Ausführungsform eines mobilen Geräts 3 zur Lokalisierung solcher Stopfen 1 in einem Rohr 2. Das Gerät 3 umfasst einen Messkopf 4 zur Detektion des durch den Stopfen 1 erzeugte magnetische Feld M mit einer ersten Seite 41 geeignet zur Auflage auf ein zu untersuchendes Rohr 2 eines Rohrsystems, in dem sich der zu suchende Stopfen 1 befindet. Der Messkopf 4 ist auf einem Stab 7 angeordnet, mit dem der Messkopf 4 über die äußere Oberfläche 21 (Außenseite) des Rohres 2 bewegt werden kann. Der Messkopf 4 ist mit einer Signaleinheit 6 über ein flexibles Kabel verbunden. In anderen Ausführungsformen kann die Verbindung zwischen Messkopf 4 und Signaleinheit 6 auch anders ausgeführt sein. Die Signaleinheit 6 sendet ein Lokalisierungssignal LS als Reaktion auf die Detektion eines magnetischen Feldes M aus, das den Stopfen 1 dadurch im Rohr 2 lokalisiert. Der Messkopf 4 umfasst mehrere Näherungsschalter 5 zur Detektion des Magnetfeldes M. Geeignete Näherungsschalter 5 sind beispielsweise Reed-Kontakt oder Reed-Schalter. Erfindungsgemäß umfasst der Messkopf 4 auf der ersten Seite 41 vier Näherungsschalter 51, 52, 53, 54, wobei der Abstand zwischen dem ersten und dem zweiten Näherungsschalter 51, 52 sowie zwischen dem dritten und dem vierten Näherungsschalter 53, 54 ein Abstand A1 ist und der zweite und der dritte Näherungsschalter 52, 53 in einem zweiten Abstand A2 größer als der erste Abstand A1 angeordnet sind. Außerdem besitzt die erste Seite 41 eine konkave Kontur, die auf zylindrische Rohre 2 angepasst ist, um den Messkopf ohne Verkanten oder Verkippen in einer definierten Position und Entfernung entlang des Rohres 2 bewegen zu können. Durch die parallele und zueinander ausgerichtete Anordung der Näherungsschalter 5 wird das magnetische Feld M ortsgenau und gegebenenfalls von mehreren Näherungsschaltern 51, 52, 53, 54, gleichzeitig detektiert, was die Messgenauigkeit und Aussagekraft des Lokalisierungssignals LS erhöht. Mit dieser konkaven Kontur der ersten Seite 41 können zylindrische Rohre 2 mit unterschiedlichen Durchmessern mit dem gleichen Messkopf 4 untersucht werden. Bei Rohren 2 mit einem kleineren Durchmesser kann der Messkopf 4 bei aufliegenden ersten und zweiten Näherungsschaltern 51, 52 oder dritten und vierten Näherungsschaltern 53, 54, auf dem Rohr 2 entlang bewegt werden. Bei einem Rohr 2 mit mittlerem Durchmesser wird der Messkopf mit aufliegenden zweiten und dritten Näherungsschaltern 52, 53 auf dem Rohr 2 entlang bewegt werden. Bei Rohren 2 mit noch größeren Durchmessern wird der Messkopf 4 mit aufliegenden ersten und vierten Näherungsschaltern 51, 54 auf dem Rohr 2 entlang bewegt werden. Bei Rohren 2, deren gewölbte äußere Oberfläche 21 genau der konkave Kontur der ersten Seite 41 entsprechen, liegen die vier Näherungsschalter 51, 52, 53, 54, alle auf der Außenseite 21 des Rohres auf. Erfindungsgemäß ist die Kontur eine V-förmige Kontur, wo sich unabhängig von der Rohrform immer zumindest einer der Näherungsschalter 5 auf oder in einer geringen Entfernung zur Oberfläche des zu untersuchenden Rohres 2 befindet. Das mobile Gerät 3 kann eine reversible Halterung des Messkopfes 4 umfassen, beispielsweise eine Steckkontaktverbindung oder eine Bajonettverbindung, so dass der Messkopf 4 leicht und schnell gegen einen anderen Messkopf 4 mit einer eventuell anders geformten ersten Seite 41, die besser auf das zu untersuchende Rohr 2 angepasst ist, ausgetauscht werden kann. Die in dieser Ausführungsform gezeigten Näherungsschalter 5 ragen aus der ersten Seite 41 heraus. Dadurch wird sichergestellt, dass sich zumindest einer der Näherungsschalter 5 im direkten Kontakt zur Oberfläche 21 des Rohres 2 befindet, auch wenn die erste Seite 41 des Messkopfs 4 eine nicht die an die Form des Rohres 2 angepasste Kontur besitzt oder der Messkopf 4 leicht verkippt bewegt wird. Der Messkopf 4 besitzt außerdem eine Ausdehnung D senkrecht zur ersten Seite 41, die größer als die Entfernung ist, in der das Magnetfeld M des Stopfens 1 durch die Näherungsschalter 5 detektiert werden kann. Dadurch wird verhindert, dass der Messkopf 4 mit der oberen Seite (Seite des Messkopfes 4, die der ersten Seite 41 gegenüber liegt) so nahe an einem parallelen Rohr vorbeigeführt wird, dass die Näherungsschalter 5, die auf dem ersten Rohr 2 aufliegen, dennoch das Magnetfeld M eines Stopfens in dem parallelen Rohr detektieren und die Signaleinheit dies anzeigt. Das Lokalisierungssignal würde dann fälschlicherweise dem untersuchten Rohr 2 zugeordnet, obwohl es dem nicht-untersuchten parallelen Rohr zugeordnet werden müsste. Das Material des Messkopfes kann beispielsweise Plastik sein.

Die Signaleinheit 6 umfasst in dieser Ausführungsform akustische Mittel 61, beispielsweise einen Lautsprecher, und optische Mittel 62, beispielsweise vier grüne LEDs, zur Aussendung eines kombinierten (simultanen) akustischen und optischen Lokalisierungssignals LS, wobei die optischen Mittel 62a, 62b, 62c, 62d, separat ausgestaltet und den vier Näherungsschaltern 51, 52, 53, 54, separat zugeordnet sind, um unabhängig von den anderen Näherungsschaltern 5 nach Detektion des durch den Stopfen 1 erzeugte magnetische Feld M das optische Lokalisierungssignal LS auszusenden. Die für den Betrieb der Komponenten des mobilen Geräts benötigte Stromversorgung kann beispielsweise über eine Batterie 63 (bespielsweise eine 9V Batterie) in der Signaleinheit 6 bereitgestellt werden. Um einen sicheren mobilen Betrieb des mobilen Geräts 3 zu gewährleisten, kann die Signaleinheit 6 mittels einer flexiblen Halterung 8 beispielsweise um den Hals eines Bedieners gehängt werden.

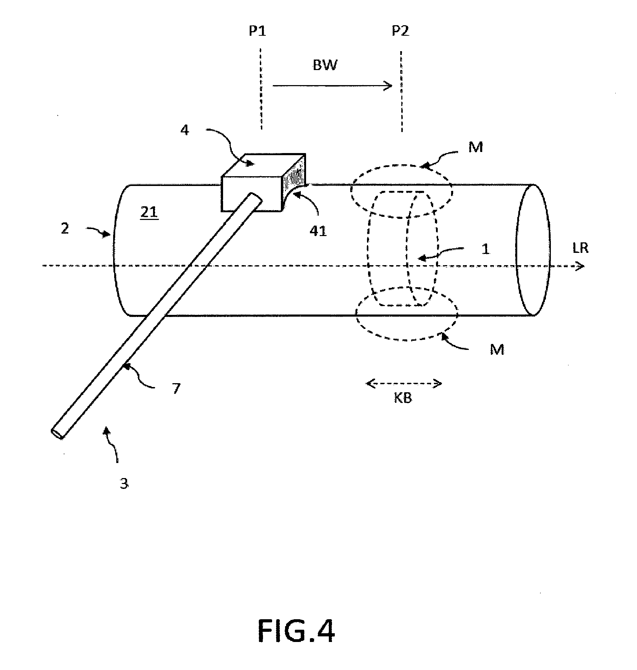

Fig.4 zeigt, wie die Lokalisierung eines erfindungsgemäßen Stopfens 1 in einem Rohr 2 mittels des erfindungsgemäßen mobilen Geräts 3 vorgenommen werden kann. Das mobile Gerät 3 wird dabei zur Lokalisierung von Stopfen 1 mit der ersten Seite 41 des Messkopfes 4 entlang einer Bewegungsrichtung BW entlang der Längsrichtung LR der Rohre 2 bewegt. Die Magneten 13 in den Stopfen 1 sind dabei so dimensioniert, dass diese Magneten 13 ein magnetisches Feld M an der Außenseite 21 des Rohres erzeugen, das im Wesentlichen auf den Klemmbereich KB des Stopfens begrenzt ist. Somit entspricht der Ort des Messkopfes 4, für den ein Lokalisierungssignal LS ausgesendet wird, der genauen Postion des Stopfens im Rohr 2. Befindet sich der Messkopf 4 an einer Position P1 auf der Außenseite 21 des Rohres 2, so ist das magnetische Feld M zu schwach (bzw. nicht vorhanden), um detektiert zu werden. Entsprechend wird an der Position P1 kein Lokalisierungssignal LS durch die Signaleinheit 6 ausgesendet. Befindet sich der Messkopf 4 dagegen an der Position P2, so ist dort das magnetische Feld M (Magnetfeld) im Klemmbereich KB des Stopfens 1 stark genug, um von den Näherungsschaltern 5 detektiert werden zu können. Entsprechend wird bei der Position P2 des Messkopfes 4 ein Lokalisierungssignal LS ausgesendet und der zu suchende Stopfen 1 ist damit am Ort P2 lokalisiert. Das Verfahren zur Suche erfindungsgemäßer Stopfen 1 in einem Rohrsystem mit unbekannter Position umfasst daher nach Anschalten des mobilen Geräts 3 die Schritte (a) Auflegen der ersten Seite 41 des Messkopfes 4 auf die äußere Seite 21 des zu untersuchenden Rohres 2, (b) Bewegen des Messkopfes 4 entlang der Längsrichtung LR der Rohre 2, bis der Signaleinheit 6 ein Lokalisierungssignal LS aussendet, und (c) Aufbringen einer Markierung auf der Außenseite 21 des Rohres 2 an der Stelle des Messkopfes 4, wo die Signaleinheit 6 das Lokalisierungssignal LS ausgesendet hat. Im Bereich der Markierung kann dann der Bereich des Rohres 2 mit Stopfen 1 aus dem Rohrsystem entfernt und durch ein entsprechendes Rohrstück ohne Stopfen ersetzt werden. Danach ist das Rohrsystem wie gewünscht voll funktionsfähig. Das Verfahren ist auf Rohrmaterialien beschränkt, die das magnetische Feld des Stopfens nicht abschirmen, so dass es an der äußeren Seite des Rohres detektierbar ist.

Das voranstehend beschriebene Verfahren zur Lokalisierung von Stopfen ausgerüstet mit entsprechenden Magneten kann beispielsweise erfolgreich bei einem Wickelfalzrohr nach DIN EN 12237, bei Rohren aus verzinktem St 37 Blech mit einer Wanddicke von 0,6 mm. Bei einem St 37 Rohr mit einer Wanddicke von 3 mm ist dessen magnetische Abschirmung dagegen bereits so stark, dass eine Detektion des Stopfens nur bei entsprechend starken Magneten im Stopfen erfolgen könnte, beispielsweise bei Magneten aus einer SmCo-Legierung, während Magneten ohne Seltenerdanteil nicht mehr erkannt werden.

Die hier gezeigten Ausführungsformen stellen nur Beispiele für die vorliegende Erfindung dar und dürfen daher nicht einschränkend verstanden werden.

### Liste der Bezugszeichen

- 1: erfindungsgemäßer Stopfen
- 11: äußerer Stopfen
- 12: innerer Stopfen
- 13: Magnet im Stopfen
- 14: Haltevorrichtung für Magnet
- 15: Vorrichtung zur Erzeugung einer Klemmwirkung
- 16a: obere Klemmplatte
- 16b: untere Klemmplatte
- 17: Klemmring
- 2: nicht-ferromagnetisches Rohr
- 21: Außenseite des Rohres (äußere Oberfläche des Rohres)
- 22: Innenseite des Rohres (Rohrinnenseite)
- 23: offenes Ende des Rohres
- 3: mobiles Gerät zur Lokalisierung der erfindungsgemäßen Stopfen
- 4: Messkopf
- 41: Erste Seite des Messkopfs
- 5: Näherungsschalter
- 51-54: erster, zweiter, dritter, vierter Näherungsschalter
- 6: Signaleinheit
- 61: akustische Mittel der Signaleinheit
- 62: optische Mittel der Signaleinheit
- 62a - 62d: separate optische Mittel
- 63: Batterie
- 7: Stab
- 8: Halterung des mobilen Geräts

- A1: erster Abstand
- A2: zweiter Abstand
- BW: Bewegungsrichtung des Messkopfes
- M: Magnetfeld, magnetisches Feld
- KB: Klemmbereich des Stopfens im Rohr
- LS: Lokalisierungssignal

## Patentansprüche

1. Ein mobiles Gerät (3) zur Lokalisierung von Stopfen (1) mit unbekannter Position in einem Rohrsystem, wobei das Gerät (3) einen Messkopf (4) geeignet zur Auflage auf ein Rohr (2) des Rohrsystems mit mindestens einem Näherungsschalter (5) angeordnet auf einer dem zu untersuchenden Rohr (2) zugewandten ersten Seite (41) des Messkopfs (4) zur Detektion des durch den Stopfen (1) erzeugten magnetischen Felds (M) und mindestens eine mit dem Messkopf (4) verbundene Signaleinheit (6) geeignet zum Aussenden eines entsprechenden Lokalisierungssignals (LS) als Reaktion auf die Detektion des durch den Stopfen (1) erzeugten magnetischen Feldes (M) umfasst,
**dadurch gekennzeichnet,**
**dass** die erste Seite (41) vorgesehen zur Auflage auf eine Außenseite des Rohres eine V-förmige Kontur besitzt und genau nur vier Näherungsschalter (51, 52, 53, 54) umfasst, wobei der Abstand zwischen dem ersten und dem zweiten Näherungsschalter (51, 52) sowie zwischen dem dritten und dem vierten Näherungsschalter (53, 54) dem ersten Abstand (A1) entspricht und der zweite und der dritte Näherungsschalter (52, 53) in einem zweiten Abstand (A2) größer als der erste Abstand (A1) angeordnet sind.

2. Das mobile Gerät (3) zur Lokalisierung von Stopfen (1) nach Anspruch 1,
**dadurch gekennzeichnet, dass** die Kontur auf das zu untersuchende Rohr (2) angepasst ist.

3. Das mobile Gerät (3) zur Lokalisierung von Stopfen (1) nach Anspruch 2,
**dadurch gekennzeichnet, dass** die Kontur der erste Seite (41) eine geeignete Bewegungsrichtung (BW) des Messkopfes (4) entlang der Längsrichtung (LR) der Rohre (2) definiert und die Näherungsschalter (51, 52, 53, 54) streifenförmige Näherungsschalter (5) sind, die parallel zur Bewegungsrichtung (BR) des Messkopfes (4) angeordnet sind und wobei die Näherungsschalter (51, 52, 53, 54) parallel zueinander angeordnet sind.

4. Das mobile Gerät (3) zur Lokalisierung von Stopfen (1) nach einem der voranstehenden Ansprüche, **dadurch gekennzeichnet, dass** der oder die Näherungsschalter (5) aus der ersten Seite (41) herausragen.

5. Das mobile Gerät zur Lokalisierung von Stopfen (1) nach Anspruch 4,
**dadurch gekennzeichnet, dass** der Näherungsschalter (5) 1 - 2 mm aus der ersten Seite (41) herausragt.

6. Das mobile Gerät zur Lokalisierung von Stopfen (1) nach Anspruch 4 oder 5, **dadurch gekennzeichnet, dass** der Näherungsschalter (5) als flacher streifenförmiger Quader mit einer Breite und einer Höhe im Millimeterbereich und einer Länge von weniger Millimetern bis zu mehreren Zentimeter ausgeführt ist.

7. Das mobile Gerät zur Lokalisierung von Stopfen (1) nach einem der voranstehenden Ansprüche, **dadurch gekennzeichnet, dass** die Signaleinheit (6) akustische und optische Mittel (61, 62) zur Aussendung eines akustischen und optischen Lokalisierungssignals (LS) umfasst,

8. Das mobile Gerät zur Lokalisierung von Stopfen (1) nach Anspruch 7,
**dadurch gekennzeichnet, dass** die Signaleinheit (6) pro Näherungsschalter (51, 52, 53, 54) ein separates optisches Mittel (62a, 62b, 62c, 62d) umfasst, das unabhängig von den anderen Näherungsschaltern (5) nach Detektion des durch den Stopfen (1) erzeugte magnetische Feld (M) das optische Lokalisierungssignal (LS) aussendet.

9. Das mobile Gerät (3) zur Lokalisierung von Stopfen (1) nach einem der voranstehenden Ansprüche, **dadurch gekennzeichnet, dass** der Messkopf (4) eine Ausdehnung (D) senkrecht zur ersten Seite (41) besitzt, die größer ist als die Entfernung, in der das Magnetfeld (M) des Stopfens (1) durch die Näherungsschalter (5) detektiert werden kann.

10. Das mobile Gerät (3) zur Lokalisierung von Stopfen (1) nach Anspruch 9, **dadurch gekennzeichnet, dass** die eine Ausdehnung (D) mehr als 2cm, vorzugsweise mehr als 3cm, beträgt.

11. Das mobile Gerät (3) zur Lokalisierung von Stopfen (1) nach einem der voranstehenden Ansprüche, **dadurch gekennzeichnet, dass** das mobile Gerät (3) eine reversible Halterung des Messkopfs (4) umfasst, so dass der Messkopf gegen einen anderen Messkopf ausgetauscht werden kann.

12. Verfahren zur Lokalisierung von mindestens einem Stopfen (1) zum reversiblen inneren Verschließen von Rohren (2), der zumindest einen Magneten (13) umfasst, dessen Magnetfeld (M) ausreichend stark ist, um ein detektierbares Magnetfeld (M) zumindest an der äußeren Oberfläche (21) des Rohres (2) aus einem nicht-ferromagnetischen Material zu erzeugen und der sich innerhalb eines Bereichs eines Rohres (2) an einer unbekannten Position befindet, umfassend die Schritte
- Auflegen zumindest eines Teils der ersten Seite (41) des Messkopfes eines mobilen Geräts (3) nach Anspruch 1 zur Lokalisierung von Stopfen (1) auf die äußere Oberfläche (21) des zu untersuchenden Rohres (2),
- Bewegen des Messkopfes (4) entlang der Längsrichtung (LR) des Rohres (2), bis eine Signaleinheit (6) des mobilen Geräts (3) ein Lokalisierungssignal (LS) aussendet, und
- Aufbringen einer Markierung auf der Außenseite (21) des Rohres (2), wo die Signaleinheit (6) des mobilen Geräts (3) das Lokalisierungssignal (LS) ausgesendet hat.

## Claims

1. A mobile device (3) for locating plugs (1) whose position in a pipe system is unknown, whereby the device (3) comprises a measuring head (4) that is suitable for placement onto a pipe (2) of the pipe system as well as at least one proximity switch (5) arranged on a first side (41) of the measuring head (4) facing the pipe (2) that is to be examined, in order to detect the magnetic field (M) generated by the plug (1), and said device also comprises at least one signal unit (6) that is connected to the measuring head (4) and that is suitable to emit an appropriate localization signal (LS) in response to the detection of the magnetic field (M) generated by the plug (1),
**characterized in that**
the first side (41) that is provided for placement onto the outside of the pipe has a V-shaped contour and comprises precisely only four proximity switches (51, 52, 53, 54), whereby the distance between the first and the second proximity switches (51, 52) as well as between the third and the fourth proximity switches (53, 54) corresponds to the first distance (A1), and the second and the third proximity switches (52, 53) are arranged at a second distance (A2) that is greater than the first distance (A1).

2. The mobile device (3) for locating plugs (1) according to claim 1, **characterized in that** the contour is adapted to the pipe (2) that is to be examined.

3. The mobile device (3) for locating plugs (1) according to claim 2, **characterized in that** the contour of the first side (41) defines a suitable movement direction (BW) of the measuring head (4) along the lengthwise direction (LR) of the pipes (2) and the proximity switches (51, 52, 53, 54) are strip-shaped proximity switches (5) that are arranged parallel to the movement direction (BR) of the measuring head (4), and whereby the proximity switches (51, 52, 53, 54) are arranged parallel with respect to each other.

4. The mobile device (3) for locating plugs (1) according to one of the preceding claims, **characterized in that** the proximity switch or switches (5) protrude from the first side (41).

5. The mobile device for locating plugs (1) according to claim 4, **characterized in that** the proximity switch (5) protrudes 1 mm to 2 mm from the first side (41).

6. The mobile device for locating plugs (1) according to claim 4 or 5, **characterized in that** the proximity switch (5) is configured as a flat strip-shaped block with a width and height in the millimeter range and a length ranging from a few millimeters to several centimeters.

7. The mobile device for locating plugs (1) according to one of the preceding claims, **characterized in that** the signal unit (6) comprises acoustic and optical means (61, 62) for emitting an acoustic and an optical localization signal (LS).

8. The mobile device for locating plugs (1) according to claim 7, **characterized in that**, for each proximity switch (51, 52, 53, 54), the signal unit (6) comprises a separate optical means (62a, 62b, 62c, 62d) that emits the optical localization signal (LS) independently of the other proximity switches (5) after the magnetic field (M) generated by the plug (1) has been detected.

9. The mobile device (3) for locating plugs (1) according to one of the preceding claims, **characterized in that** the measuring head (4) has an extension (D) perpendicular to the first side (41) that is greater than the distance within which the magnetic field (M) of the plug (1) can be detected by the proximity switch (5).

10. The mobile device (3) for locating plugs (1) according to claim 9, **characterized in that** the one extension (D) amounts to more than 2 cm, preferably more than 3 cm.

11. The mobile device (3) for locating plugs (1) according to one of the preceding claims, **characterized in that** the mobile device (3) comprises a reversible holder for the measuring head (4), so that the measuring head can be replaced by another measuring head.

12. A method for locating at least one plug (1) used for reversibly closing pipes (2), said plug (1) comprising at least one magnet (13) whose magnetic field (M) is strong enough to generate a detectable magnetic field (M) at least on the outer surface (21) of the pipe (2) made of a non-ferromagnetic material, said plug (1) being located within a section of a pipe (2) in an unknown position, comprising the following steps:
• at least part of the first side (41) of the measuring head of a mobile device (3) according to claim 1 for locating plugs (1) is placed onto the outer surface (21) of the pipe (2) that is to be examined,
• the measuring head (4) is moved along the lengthwise direction (LR) of the pipe (2) until a signal unit (6) of the mobile device (3) emits a localization signal (LS), and
• a marking is applied on the outside (21) of the pipe (2) where the signal unit (6) of the mobile device (3) has emitted the localization signal (LS).

## Revendications

1. Appareil mobile (3) permettant de localiser des bouchons (1) occupant une position inconnue dans un système de tuyauterie, l'appareil (3) comprenant une tête de mesure (4) appropriée pour être posée sur un tuyau (2) du système de tuyauterie et munie d'au moins un commutateur de proximité (5) agencé sur une première face (41) de la tête de mesure (4) dirigée vers le tuyau à examiner (2) pour détecter le champ magnétique (M) produit par le bouchon (1), et comprenant au moins une unité de signal (6) reliée à la tête de mesure (4) et appropriée pour émettre un signal de localisation (LS) correspondant en réponse à la détection du champ magnétique (M) produit par le bouchon (1), **caractérisé en ce que** la première face (41) prévue pour être posée sur une face extérieure du tuyau possède un contour en forme de V et exactement seulement quatre commutateurs de proximité (51, 52, 53, 54), la distance entre le premier et le deuxième commutateur de proximité (51, 52) ainsi qu'entre le troisième et le quatrième commutateur de proximité (53, 54) correspondant à la première distance (A1) et le deuxième et le troisième commutateur de proximité (52, 53) étant situés à une deuxième distance (A2) supérieure à la première distance (A1).

2. Appareil mobile (3) permettant de localiser des bouchons (1) selon la revendication 1, **caractérisé en ce que** le contour est adapté au tuyau à examiner (2).

3. Appareil mobile (3) permettant de localiser des bouchons (1) selon la revendication 2, **caractérisé en ce que** le contour de la première face (41) définit une direction de mouvement appropriée (BW) de la tête de mesure (4) le long de la direction longitudinale (LR) des tuyaux (2) et **en ce que** les commutateurs de proximité (51, 52, 53, 54) sont des commutateurs de proximité en forme de bandes qui sont agencés parallèlement à la direction de mouvement (BW) de la tête de mesure (4), et les commutateurs de proximité (51, 52, 53, 54) étant agencés parallèlement entre eux.

4. Appareil mobile (3) permettant de localiser des bouchons (1) selon l'une des revendications précédentes, **caractérisé en ce que** le ou les commutateur(s) de proximité (5) fait ou font saillie sur la première face (41).

5. Appareil mobile permettant de localiser des bouchons (1) selon la revendication 4, **caractérisé en ce que** le commutateur de proximité (5) fait saillie de 1 à 2 mm sur la première face (41).

6. Appareil mobile permettant de localiser des bouchons (1) selon la revendication 4 ou 5, **caractérisé en ce que** le commutateur de proximité (5) est réalisé en tant que parallélépipède rectangle plat en forme de bande présentant une largeur et une hauteur de l'ordre du millimètre et une longueur de quelques millimètres à plusieurs centimètres.

7. Appareil mobile permettant de localiser des bouchons (1) selon l'une des revendications précédentes, **caractérisé en ce que** l'unité de signal (6) comprend des moyens acoustiques et optiques (61, 62) pour émettre un signal de localisation acoustique et optique (LS).

8. Appareil mobile (3) permettant de localiser des bouchons (1) selon la revendication 7, **caractérisé en ce que** l'unité de signal (6) comprend, pour chaque commutateur de proximité (51, 52, 53, 54), un moyen optique séparé (62a, 62b, 62c, 62d) qui émet le signal de localisation optique (LS) indépendamment des autres commutateurs de proximité (5) après la détection du champ magnétique (M) produit par le bouchon (1).

9. Appareil mobile (3) permettant de localiser des bouchons (1) selon l'une des revendications précédentes, **caractérisé en ce que** la tête de mesure (4) possède une dimension (D) verticale à la première face (41) et supérieure à la distance à laquelle le champ magnétique (M) du bouchon (1) peut être détecté par le commutateur de proximité (5).

10. Appareil mobile (3) permettant de localiser des bouchons (1) selon la revendication 9, **caractérisé en ce que** l'une dimension (D) est supérieure à 2 cm, et de préférence supérieure à 3 cm.

11. Appareil mobile (3) permettant de localiser des bouchons (1) selon l'une des revendications précédentes, **caractérisé en ce que** l'appareil mobile (3) comprend une fixation réversible de la tête de mesure (4), de sorte que la tête de mesure peut être remplacée par une autre tête de mesure.

12. Procédé de localisation d'au moins un bouchon (1) destiné à l'obturation intérieure réversible de tuyaux (2), qui comprend au moins un aimant (13) dont le champ magnétique (M) est suffisamment fort pour produire un champ magnétique détectable (M) au moins sur la surface extérieure (21) du tuyau (2) en matériau non ferromagnétique, et qui occupe une position inconnue dans une zone d'un tuyau (2), comprenant les étapes suivantes :
- application, sur la surface extérieure (21) du tuyau à examiner (2), d'au moins une partie de la première face (41) de la tête de mesure d'un appareil mobile (3) selon la revendication 1 pour localiser des bouchons (1) ;
- déplacement de la tête de mesure (4) le long de la direction longitudinale (LR) du tuyau (2) jusqu'à ce qu'une unité de signal (6) de l'appareil mobile (3) émette un signal de localisation (LS) ; et
- application d'un marquage sur la face externe (21) du tuyau (2) là où l'unité de signal (6) de l'appareil mobile (3) a émis le signal de localisation (LS).
